# EUROPÄISCHE PATENTSCHRIFT

(11) **EP 0 780 447 B1**
(45) Veröffentlichungstag und Bekanntmachung des Hinweises auf die Patenterteilung: **30.10.2002**
(21) Anmeldenummer: 96810869.6
(22) Anmeldetag: 13.12.1996
(51) Int. Cl.: C09B 67/26

(54) **Wässrige Farbstofflösungen**
Aqueous dye solutions
Solutions aqueuses de colorants

(30) Priorität: 22.12.1995 CH 367095
(43) Veröffentlichungstag der Anmeldung: 25.06.1997
(73) Patentinhaber: Ciba Specialty Chemicals Holding Inc., 4057 Basel (CH)
(72) Erfinder: Höhener, Alfred, 4312 Magden (CH); Frick, Roland, 68480 Durmenach (FR); Käser, Adolf, 4103 Bottmingen (CH)

(56) Entgegenhaltungen:
- FR-A- 2 110 324
- FR-A- 2 416 926
- FR-A- 2 424 305
- GB-A- 2 179 361
- GB-A- 2 254 335
- JP-A- 63 243 166
- US-A- 4 087 245
- US-A- 4 968 784

## Beschreibung

Die vorliegende Erfindung betrifft wässrige Farbstofflösungen von roten Disazofarbstoffen, Verfahren zu ihrer Herstellung sowie ihre Verwendung zum Färben von Papier.

In den letzten Jahren hat die Verwendung von konzentrierten wässrigen Lösungen von Farbstoffen an Bedeutung gewonnen, und zwar wegen der Vorteile, die solche Lösungen gegenüber Farbstoffen in Pulverform besitzen. Durch die Verwendung von Lösungen werden die mit der Staubbildung verbundenen Schwierigkeiten vermieden und die Verbraucher von der zeitraubenden und oftmals schwierigen Auflösung des Farbstoffpulvers in Wasser befreit. Die Verwendung von konzentrierten Lösungen wurde ausserdem durch die Entwicklung von kontinuierlichen Färbeverfahren für Papier angeregt, da es bei diesen Verfahren zweckmässig ist, die Lösung direkt in den Holländer zu geben oder an irgendeinem anderen geeigneten Punkt der Papierherstellung zuzufügen.

Bei einigen Farbstoffen, z.B. bei den weiter unten aufgeführten Farbstoffen der Formel (1), bereitet die Formulierung von konzentrierten Farbstofflösungen jedoch Schwierigkeiten, da in den konzentrierten Lösungen bei der Lagerung, vor allem bei Temperaturen unterhalb von Raumtemperatur, Ablagerungen auftreten, die gar nicht oder nur unter zusätzlichem Arbeitsaufwand wieder in Lösung gebracht werden können. Zudem sollen als Handelsform geeignete konzentrierte Lösungen beim Verdünnen zur Herstellung der Färbebäder klare Lösungen, enthaltend ca. 1 bis 3 Gew. % Farbstoff, ohne Niederschlag ergeben und dies soll noch in einem möglichst weiten pH-Bereich zutreffen.

Der vorliegenden Erfindung lag die Aufgabe zugrunde, geeignete konzentrierte Lösungen für die weiter unten aufgeführten Farbstoffe der Formel (1) zur Verfügung zu stellen. Es wurde nun gefunden, dass die nachstehend beschriebenen Farbstofflösungen den gestellten Anforderungen in hervorragender Weise genügen.

Gegenstand der vorliegenden Erfindung sind daher
A) konzentrierte wässrige Farbstofflösungen, enthaltend
   a) mindestens 5 Gew. %, bezogen auf das Gewicht der Lösung, eines roten Farbstoffes der Formel 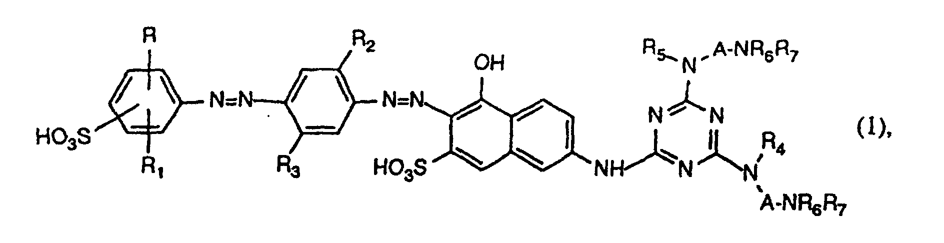 worin
      R und R₁ unabhängig voneinander je Wasserstoff, Cl, Methyl oder Methoxy,
      R₂ und R₃ unabhängig voneinander je Wasserstoff, Methyl oder Methoxy,
      R₄ und R₅ unabhängig voneinander je Wasserstoff oder C₁-C₄-Alkyl,
      A ein unverzweigter oder verzweigter Alkylenrest, der durch O unterbrochen sein kann,
      R₆ und R₇ unabhängig voneinander je Wasserstoff oder C₁-C₆-Alkyl bedeuten oder worin R₆ und R₇ zusammen mit dem an sie gebundenen N-Atom einen gegebenenfalls substituierten 5-, 6- oder 7-gliedrigen Ring bilden, der weitere Heteroatome enthalten kann,
   b) Ameisensäure oder eine C₁-C₄-Alkylcarbonsäure,
   c) einen Lösungsvermittler, ausgewählt aus der Gruppe, bestehend aus
      I) Alkalimetall- oder Ammoniumsalze von C₁-C₄-Alkylcarbonsäuren,
      II) Formamid oder Harnstoff,
      III) γ-Butyrolactam, ε-Caprolactam, γ-Butyrolacton oder ε-Caprolacton,
      IV) Alkanolamine oder Umsetzungsprodukte von Ethylenoxid und/oder Propylenoxid mit Alkanolaminen,
   d) Wasser und gegebenenfalls
   e) weitere Zusätze oder
B) konzentrierte wässrige Farbstofflösungen, enthaltend
   a) mindestens 5 Gew. %, bezogen auf das Gewicht der Lösung, eines roten Farbstoffes der Formel (1),
   b) Ameisensäure oder eine C₁-C₄-Alkylcarbonsäure,
   c) Wasser und gegebenenfalls
   d) weitere Zusätze, mit der Bedingung, dass die Lösungen keinen Lösungsvermittler und weniger als 0,1 Gew. % Alkalihalogenid, bezogen auf das Gesamtgewicht der Lösung, enthalten.

Die Farbstofflösungen der Gruppe A) bilden einen bevorzugten Gegenstand der vorliegenden Erfindung.

Bei den Farbstoffen der Formel (1) bedeuten R und R₁ vorzugsweise je H, Methyl oder Methoxy, wobei H besonders bevorzugt ist.

R₂ und R₃ bedeuten vorzugsweise je H.

R₄ und R₅ bedeuten vorzugsweise je Methyl oder vor allem Wasserstoff.

Als Reste A kommen vor allem C₂-C₆-Alkylenreste in Betracht, bei denen die Alkylenkette geradlinig oder verzweigt oder auch durch Brückenglieder, wie z.B. -O-, unterbrochen sein kann oder bei denen die Alkylenkette substituiert ist, z.B. durch OH.

Vorzugsweise ist A ein Rest der Formel -(CH₂)ₙ-, worin n eine ganze Zahl von 2 bis 6 bedeutet.

Insbesondere geeignete Reste A sind Ethylen, n-Propylen, iso-Propylen oder n-Butylen. Ganz besonders bevorzugt unter diesen ist n-Propylen.

R₆ und R₇ bedeuten unabhängig voneinander je lineares oder verzweigtes unsubstituiertes C₁-C₆-Alkyl oder C₁-C₆-Alkyl, das substituiert ist, z.B. durch OH oder C₁-C₄-Alkoxy. Die Alkylketten können auch unterbrochen sein, z.B. durch -O-.

Vorzugsweise bedeuten R₆ und R₇ unabhängig voneinander je unsubstituiertes C₁-C₄-Alkyl und in einer ganz besonders bevorzugten Ausführungsform sind R₆ und R₇ gleich und bedeuten jeweils Methyl oder Ethyl.

Falls R₆ und R₇ zusammen mit dem sie verbindenden N-Atom einen 5-, 6- oder 7-Ring bedeuten, so handelt es sich vor allem um einen Pyrrolidin-, Piperidin-, Morpholin- oder Piperazinring. Der Piperazinrest kann am nicht mit der Alkylenkette verbundenen N-Atom substituiert sein, z.B. durch Alkyl.

In den Farbstoffen der Formel (1) ist die Sulfogruppe vorzugsweise in m- oder vor allem in p-Position zur Azogruppe angeordnet.

Bevorzugte erfindungsgemässe konzentrierte Lösungen enthalten einen Farbstoff der Formel 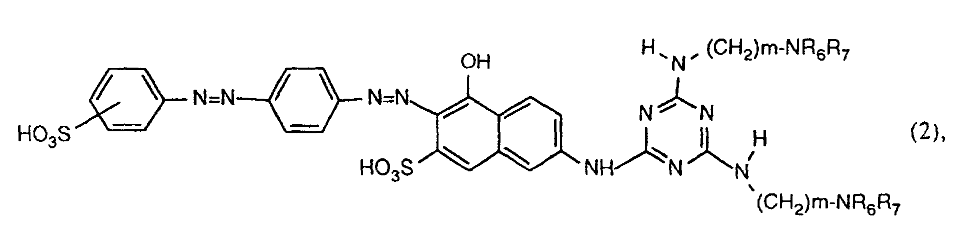 worin
m 2, 4 oder insbesondere 3 und
R₆ und R₇ je C₁-C₂-Alkyl bedeuten.

Die Konzentration des Farbstoffes kann in weiten Grenzen schwanken und beträgt mindestens 5 Gew. %, vorzugsweise 6 bis 20 Gew %, insbesondere 8 bis 10 Gew. %, bezogen auf das Gewicht der konzentrierten Lösung.

Als Alkylcarbonäure kommen z.B. Essigsäure, Propionsäure, Buttersäure oder Valeriansäure in Betracht. Bevorzugt sind Propionsäure und insbesondere Essigsäure.

Bei den Lösungsvermittlern der Gruppe I) handelt es sich vor allem um die Natrium-, Kalium-, Lithium- oder Ammoniumsalze der Essigsäure oder Propionsäure. Besonders bevorzugt sind Natrium- und Ammoniumacetat. Selbstverständlich müssen die Lösungsvermittler der Gruppe I) nicht in Form der genannten Salze eingesetzt werden, sondern können auch in den Lösungen durch Neutralisation aus den entsprechenden Basen und Säuren hergestellt werden.

Geeignete Lösungsvermittler der Gruppe III) sind z.B. γ-Butyrolactam oder ε-Caprolacton, insbesondere jedoch γ-Butyrolacton oder vor allem ε-Caprolactam.

Bei den Lösungsvermittlern der Gruppe IV) handelt es sich z.B. um Diethanolamin oder Triethanolamin, vor allem aber um Umsetzungsprodukte von 1 bis 6 Mol Ethylenoxid und/oder Propylenoxid mit 1 Mol Diethanolamin oder Triethanolamin. Besonders bevorzugt sind Verbindungen der Formel 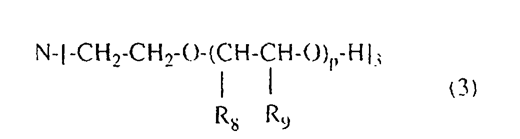 worin
p eine ganze Zahl von 1 bis 6 und von den Substituenten
R₈ und R₉ der eine Wasserstoff und der andere Wasserstoff oder Methyl bedeutet.

Vorzugsweise bedeutet bei den Verbindungen der Formel (3) p gleich 1.

Die Lösungsvermittler der Gruppe I) sind vorzugsweise in einer Menge von 1 bis 6 Gew. %, insbesondere 1 bis 3 Gew. %, bezogen auf das Gewicht der Lösung, vorhanden.

Die Lösungsvermittler der Gruppen II), III) und IV) sind vorzugsweise in einer Menge von 3 bis 20 Gew. %, insbesondere 6 bis 15 Gew. %, bezogen auf das Gewicht der Lösung vorhanden.

Es ist auch möglich, Gemische von Lösungsvermittlern einer Gruppe oder Gemische von Lösungsvermittlern verschiedener Gruppen einzusetzen, beispielsweise Gemische von Ammoniumacetat und Harnstoff.

Die C₁-C₄-Alkylcarbonsäure wird vorzugsweise in einer Menge von 3 bis 20 Gew. %, insbesondere 6 bis 15 Gew. %, bezogen auf das Gewicht der Lösung eingesetzt.

Als weitere Zusätze, die in den erfindungsgemässen konzentrierten Lösungen vorhanden sein können, sind organische Lösungsmittel, wie z.B. Dimethylsulfoxid, N-Methylpyrrolidon, Ethylenglykol, Propylenglykol oder Glycerin, sowie Borsäure zu nennen.

Die erfindungsgemässen konzentrierten wässrigen Lösungen der Gruppe A) können z.B. hergestellt werden, indem man die bei der Herstellung des Farbstoffes anfallende Farbstofflösung filtriert, anschliessend unter Rühren die C₁-C₄-Alkylcarbonsäure, den Lösungsvermittler und ggf. weitere Zusätze zugibt und zum Schluss mit Wasser auf die gewünschte Konzentration einstellt.

Die erfindungsgemässen konzentrierten wässrigen Lösungen der Gruppe B) enthalten keinen Lösungsvermittler und dürfen deshalb nur wenig Alkalihalogenid enthalten, da sonst hochviskose Lösungen oder solche mit ungenügender Lagerstabilität erhalten werden. Bedingt durch die Synthese der Farbstoffe der Formel (1), die üblicherweise durch Umsetzung von Cyanurchlorid mit den entsprechenden Aminen bei einem alkalischen pH-Wert erfolgt, enthalten die Farbstofflösungen jedoch normalerweise erhebliche Mengen an Alaklihalogenid und müssen deshalb durch ein geeignetes Verfahren auf einen Alkalihalogenid-Gehalt unter 0,1 Gew. %, bezogen auf das Gesamtgewicht der Lösung, gebracht werden.

Dies geschieht auf an sich bekannte Weise, beispielsweise durch Umkehrosmose, Ultrafiltation oder Dialyse. Solche Entsalzungsverfahren sind bekannt, z.B. aus der EP-A 0 059 782. Ebenfalls bekannt sind die in diesen Verfahren verwendeten Membranen, z.B. aus der EP-A 0 061 424.

Die Verfahrensbedingungen bei dieser Entsalzung werden so gewählt, dass man Farbstofflösungen erhält, die weniger als 0,1 Gew. %, vorzugsweise weniger als 0,07 Gew. %, bezogen auf das Geamtgewicht der Lösung, Alkalihalogenid enthalten.

Unter Alkalihalogenid sind in dieser Anmeldung Lithium-, Natrium- oder Kaliumfluorid, -chlorid, -bromid und -iodid zu verstehen.

Die erfindungsgemässen konzentrierten wässrigen Lösungen der Gruppe B) können also z.B. hergestellt werden, indem man die bei der Herstellung des Farbstoffes anfallende Farbstofflösung filtriert, entsalzt und anschliessend unter Rühren die C₁-C₄-Alkylcarbonsäure und ggf. weitere Zusätze zugibt und zum Schluss mit Wasser auf die gewünschte Konzentration einstellt.

Die erfindungsgemässen konzentrierten wässrigen Farbstofflösungen sind bei Lagerungstemperaturen zwischen 60° und -20° C mehrere Wochen stabil und eignen sich zum Färben von Papier, auf welchem sie mit oder ohne Verwendung eines Leimungsmittels und/oder Füllmittels attraktive rote Farbtöne mit hoher Lichechtheit ergeben.

Die Farbstofflösungen können nach allen in der Papierindustrie für substantive Farbstoffe gebräuchlichen Verfahren verwendet werden, insbesondere in der Masse- wie in der Oberflächenfärbung von Papier für geleimte und ungeleimte Sorten, ausgehend von gebleichtem oder ungebleichtem Zellstoff verschiedener Provenienz, wie Nadel- oder Laubholz-sulfit- und/oder -sulfat-Zellstoff, Holzschliff oder Mischungen aus Zellstoff und Holzschliff.

Die Farbstoffe der Formeln (1) und (2) sind bekannt, z.B. aus der JP-A-075 924, oder aus der FR 2, 424, 305, worin deren Herstellung und Anwendung beschrieben ist oder können analog zu der dort beschriebenen Herstellungsweise erhalten werden.

In den nachfolgenden Beispielen bedeuten die Teile Gewichtsteile, und die Temperaturen sind in Celsiusgraden angegeben.

Beispiel 1: Zu 780 Teilen einer wässrigen Lösung, enthaltend 96 Teile des Farbstoffes der Formel 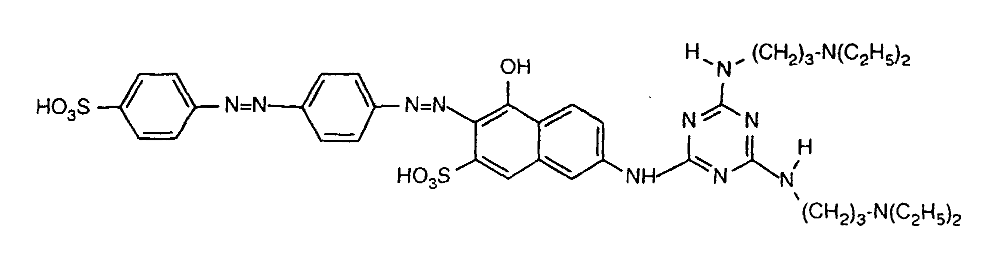 werden innerhalb von 50 Minuten 120 Teile Eisessig unter Rühren zugetropft. Zu der erhaltenen dünnflüssigen Lösung gibt man im Verlauf von 10 Minuten 120 Teile Harnstoff unter Rühren zu und rührt noch weitere 20 Minuten. Nach Zugabe von 180 Teilen Wasser rührt man noch weitere 30 Minuten.

Man erhält eine dünnflüssige Farbstofflösung, die sowohl bei Raumtemperatur als auch bei 4°, bei -20° und bei 60° C mehrere Monate lagerstabil ist.

Diese Lösung ist beliebig mit Wasser verdünnbar, ohne dass Ausfällungen auftreten. Eine Färbelösung, die 2 % der obigen Farbstofflösung enthält, bleibt bei Raumtemperatur mehrere Tage stabil.

Beispiel 2: Zu 780 Teilen einer wässrigen Lösung, enthaltend 96 Teile des Farbstoffes aus Beispiel 1 werden innerhalb von 50 Minuten 120 Teile Eisessig unter Rühren zugetropft. Zu der erhaltenen dünnflüssigen Lösung gibt man im Verlauf von 10 Minuten 24 Teile Ammoniumacetat unter Rühren zu und rührt noch weitere 20 Minuten. Nach Zugabe von 276 Teilen Wasser rührt man noch weitere 30 Minuten.

Man erhält ein dünnflüssige Farbstofflösung, die sowohl bei Raumtemperatur als auch bei 4°, bei -20° und bei 60° C mehrere Monate lagerstabil ist.

Diese Lösung ist beliebig mit Wasser verdünnbar, ohne dass Ausfällungen auftreten. Eine Färbelösung, die 2 % der obigen Farbstofflösung enthält, bleibt bei Raumtemperatur mehrere Tage stabil.

Beispiel 3: Zu 780 Teilen einer wässrigen Lösung, enthaltend 96 Teile des Farbstoffes aus Beispiel 1 werden innerhalb von 40 Minuten 120 Teile Eisessig unter Rühren zugetropft. Zu der erhaltenen dünntlüssigen Lösung gibt man im Verlauf von 10 Minuten 84 Teile des Umsetzungsproduktes von 3 Mol Propylenoxid mit 1 Mol Triethanolamin unter Rühren zu und rührt noch weitere 20 Minuten. Nach Zugabe von 240 Teilen Wasser rührt man noch weitere 30 Minuten.

Man erhält ein dünnflüssige Farbstofflösung, die sowohl bei Raumtemperatur als auch bei 4°, bei -20° und bei 60° C mehrere Monate lagerstabil ist.

Diese Lösung ist beliebig mit Wasser verdünnbar, ohne dass Ausfällungen auftreten. Eine Färbelösung, die 2 % der obigen Farbstofflösung enthält, bleibt bei Raumtemperatur mehrere Tage stabil.

Beispiel 4: Zu 2,6 Teilen einer wässrigen Lösung, enthaltend 0,32 Teile des Farbstoffes aus Beispiel 1 wird 1 Teil 48 %ige Essigsäure zugetropft. Zu der erhaltenen dünnflüssigen Lösung gibt man 0,1 Teile Natriumacetat. Nach Zugabe von 0,3 Teilen Wasser schüttelt man die Mischung gut.

Man erhält ein dünnflüssige Farbstofflösung, die sowohl bei Raumtemperatur als auch bei 4°, bei -20° und bei 60° C mehrere Monate lagerstabil ist.

Diese Lösung ist beliebig mit Wasser verdünnbar, ohne dass Ausfällungen auftreten. Eine Färbelösung, die 2 % der obigen Farbstofflösung enthält, bleibt bei Raumtemperatur mehrere Tage stabil.Eine Lösung, die mit Wasser auf eine Farbstoffkonzentration von 2 % verdünnt wurde, ist bei Raumtemperatur mehrere Wochen lagerstabil.

Beispiel 5: Zu 2,6 Teilen einer wässrigen Lösung, enthaltend 0,32 Teile des Farbstoffes aus Beispiel 1 wird 1 Teil 40 %ige Propionsäure zugetropft. Zu der erhaltenen dünnflüssigen Lösung gibt man 0,3 Teile Harnstoff. Nach Zugabe von 0,1 Teilen Wasser schüttelt man die Mischung gut.

Man erhält ein dünnflüssige Farbstofflösung, die sowohl bei Raumtemperatur als auch bei 4°, bei -20° und bei 60°C mehrere Monate lagerstabil ist.

Diese Lösung ist beliebig mit Wasser verdünnbar, ohne dass Ausfällungen auftreten. Eine Färbelösung, die 2 % der obigen Farbstofflösung enthält, bleibt bei Raumtemperatur mehrere Tage stabil.

Beispiel 6: 2662 Teile einer wässrigen Lösung vom pH-Wert 9,7, enthaltend 256 Teile des im Beispiel 1 beschriebenen Farbstoffes und 40 Teile NaCl und 26 Teile Diethylaminopropylamin, wird durch Zugabe von 40 %iger NaOH auf einen pH-Wert von 12 eingestellt und anschliessend auf einer Labor-Umkehrosmose-Anlage unter folgenden Bedingungen entsalzt: MPT 30 (MPS)-Membran (Polyethylenimin); ca. 50° C; Feed: 12 l/min; 25 bar; Flux am Anfang: 1425 l/m²d. Nach 6 Stunden erhält man 1234 Teile Lösung, enthaltend 20,75 % Farbstoff und 0,04 % NaCl. Die Lösung enthält kein Diethylaminopropylamin mehr. Sie wird durch Zutropfen von Eisessig und Zugabe von Wasser auf einen pH-Wert von 3,7 und einen Farbstoffgehalt von 10 % eingestellt.

Man erhält ein dünnflüssige Farbstofflösung, die sowohl bei Raumtemperatur als auch bei 4°, bei -20° und bei 60° C mehrere Monate lagerstabil ist.

Diese Lösung ist beliebig mit Wasser verdünnbar, ohne dass Ausfällungen auftreten. Eine Färbelösung, die 2 % der obigen Farbstofflösung enthält, bleibt bei Raumtemperatur mehrere Tage stabil.

Beispiel 7: In einem Holländer werden 70 Teile chemisch gebleichte Sulfitzellulose (aus Nadelholz) und 30 Teile chemisch gebleichte Sulfitzellulose (aus Birkenholz) in 2000 Teilen Wasser gemahlen. Zu dieser Masse gibt man 2,5 Teile der im Beispiel 1 beschriebenen Farbstoftlösung. Nach 20 Minuten Mischzeit wird aus dieser Masse Papier hergestellt. Das auf diese Weise erhaltene saugfähige Papier ist rot gefärbt. Die Färbung weist eine hohe Lichtechtheit auf. Das Abwasser ist praktisch farblos.

Beispiel 8: 3,0 Teile der Farbstofflösung aus Beispiel 6 werden in 100 Teilen Wasser gelöst und die Lösung zu 100 Teilen chemisch gebleichter Sulfitzellulose, die mit 2000 Teilen Wasser in einem Holländer gemahlen wurden, zugesetzt. Nach 15 Minuten Durchmischung wird auf übliche Art mit Harzleim und Aluminiumsulfat geleimt. Papier, das aus diesem Stoff hergestellt wird, besitzt eine rote Nuance mit guten Nassechtheiten und guter Lichtechtheit.

## Patentansprüche

1. Konzentrierte wässrige Farbstofflösungen, enthaltend
A)
a) mindestens 5 Gew. %, bezogen auf das Gewicht der Lösung, eines roten Farbstoffes der Formel 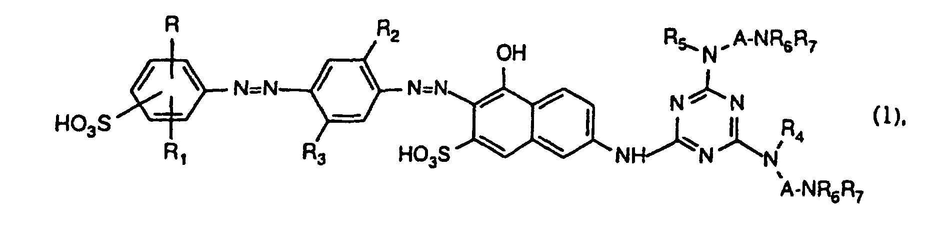 worin
R und R₁ unabhängig voneinander je Wasserstoff, Cl, Methyl oder Methoxy,
R₂ und R₃ unabhängig voneinander je Wasserstoff, Methyl oder Methoxy,
R₄ und R₅ unabhängig voneinander je Wasserstoff oder C₁-C₄-Alkyl,
A ein unverzweigter oder verzweigter Alkylenrest, der durch O unterbrochen sein kann,
R₆ und R₇ unabhängig voneinander je Wasserstoff oder C₁-C₆-Alkyl bedeuten oder worin R₆ und R₇ zusammen mit dem an sie gebundenen N-Atom einen gegebenenfalls substituierten 5-, 6- oder 7-gliedrigen Ring bilden, der weitere Heteroatome enthalten kann.
b) Ameisensäure oder eine C₁-C₄-Alkylcarbonsäure,
c) einen Lösungsvermittler, ausgewählt aus der Gruppe, bestehend aus
I) Alkalimetall- oder Ammoniumsalze von C₁-C₄-Alkylcarbonsäuren,
II) Formamid oder Harnstoff,
III) γ-Butyrolactam, ε-Caprolactam, γ-Butyrolacton oder ε-Caprolacton,
IV) Alkanolamine oder Umsetzungsprodukte von Ethylenoxid und/oder Propylenoxid mit Alkanolaminen,
d) Wasser und gesebenenfalls
e) weitere Zusätze oder
B)
a) mindestens 5 Gew. %, bezogen auf das Gewicht der Lösung, eines roten Farbstoffes der Formel (1),
b) Ameisensäure oder eine C₁-C₄-Alkylcarbonsäure,
c) Wasser und gegebenenfalls
d) weitere Zusätze, mit der Bedingung, dass die Lösungen keinen Lösungsvermittler und weniger als 0,1 Gew. % Alkalihalogenid, bezogen auf das Gesamtgewicht der Lösung, enthalten.

2. Konzentrierte wässrige Farbstofflösungen gemäss Anspruch 1, enthaltend
a) mindestens 5 Gew. %, bezogen auf das Gewicht der Lösung, eines roten Farbstoffes der Formel 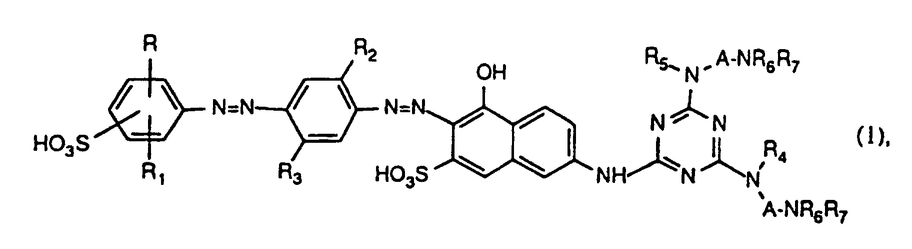 worin
R und R₁ unabhängig voneinander je Wasserstoff, Cl, Methyl oder Methoxy,
R₂ und R₃ unabhängig voneinander je Wasserstoff, Methyl oder Methoxy,
R₄ und R₅ unabhängig voneinander je Wasserstoff oder C₁-C₄-Alkyl,
A ein unverzweigter oder verzweigter Alkylenrest, der durch O unterbrochen sein kann,
R₆ und R₇ unabhängig voneinander je Wasserstoff oder C₁-C₆-Alkyl bedeuten oder worin R₆ und R₇ zusammen mit dem an sie gebundenen N-Atom einen gegebenenfalls substituierten 5-, 6- oder 7-gliedrigen Ring bilden, der weitere Heteroatome enthalten kann,
b) Ameisensäure oder eine C₁-C₄-Alkylcarbonsäure,
c) einen Lösungsvermittler,
d) Wasser und gegebenenfalls
e) weitere Zusätze.

3. Konzentrierte wässrige Farbstofflösungen gemäss einem der Ansprüche 1 oder 2, worin R und R₁ je H, Methyl oder Methoxy bedeuten.

4. Konzentrierte wässrige Farbstofflösungen gemäss Anspruch 3, worin R und R₁ je H bedeuten.

5. Konzentrierte wässrige Farbstofflösungen gemäss einem der Ansprüche 1 bis 4, worin R₂ und R₃ je H bedeuten.

6. Konzentrierte wässrige Farbstofflösungen gemäss einem der Ansprüche 1 bis 5, worin R₄ und R₅ je Methyl oder Wasserstoff bedeuten.

7. Konzentrierte wässrige Farbstofflösungen gemäss einem der Ansprüche 1 bis 6, worin A ein Rest der Formel -(CH₂)ₙ- ist, worin n eine ganze Zahl von 2 bis 6 bedeutet.

8. Konzentrierte wässrige Farbstofflösungen gemäss Anspruch 7, worin A Ethylen, n-Propylen, iso-Propylen oder n-Butylen ist.

9. Konzentrierte wässrige Farbstoftlösungen gemäss einem der Ansprüche 1 bis 8, worin R₆ und R₇ unabhängig voneinander je unsubstituiertes C₁ bis C₄-Alkyl bedeuten.

10. Konzentrierte wässrige Farbstofflösungen gemäss Anspruch 9, worin R₆ und R₇ gleich sind und je Methyl oder Ethyl bedeuten.

11. Konzentrierte wässrige Farbstofflösungen gemäss einem der Ansprüche 1 bis 10, worin die Sulfogruppe in m- oder in p-Position zur Azogruppe angeordnet ist.

12. Konzentrierte wässrige Farbstofflösungen gemäss einem der Ansprüche 1 bis 11, enthaltend 6 bis 20 Gew. % Farbstoff, bezogen auf das Gewicht der Lösung.

13. Konzentrierte wässrige Farbstofflösungen gemäss Anspruch 12, enthaltend 8 bis 10 Gew. % Farbstoff, bezogen auf das Gewicht der Lösung.

14. Konzentrierte wässrige Farbstofflösungen gemäss einem der Ansprüche 1 bis 13, enthaltend einen Farbstoff der Formel 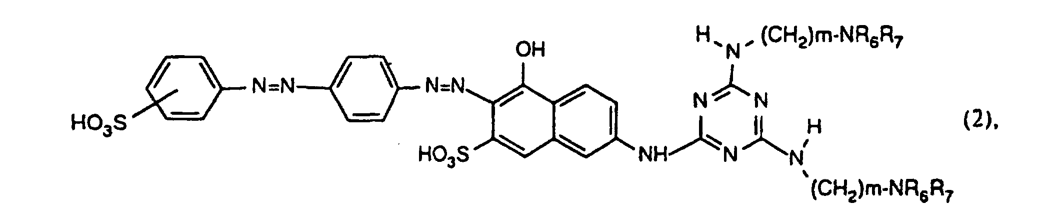 worin
m 2, 3 oder 4 und
R₆ und R₇ je C₁-C₂-Alkyl bedeuten.

15. Konzentrierte wässrige Farbstofflösungen gemäss Anspruch 1, enthaltend als Lösungsvermittler Natrium- oder Ammoniumacetat, Formamid, Harnstoff, ε-Caprolactam oder eine Verbindung der Formel 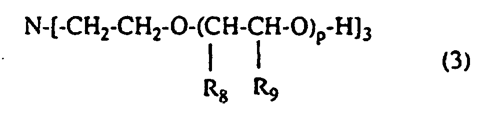 worin
p eine ganze Zahl von 1 bis 6 und von den Substituenten
R₈ und R₉ der eine Wasserstoff und der andere Wasserstoff oder Methyl bedeutet.

16. Konzentrierte wässrige Farbstofflösungen gemäss Anspruch 15, worin p gleich 1.

17. Konzentrierte wässrige Farbstofflösungen gemäss einem der Ansprüche 1 bis 16, enthaltend einen Lösungsvermittler der Gruppe I) in einer Menge von 1 bis 5 Gew. %, bezogen auf das Gewicht der Lösung, oder einen Lösungsvermittler der Gruppen II), III) oder IV) in einer Menge von 3 bis 20 Gew. %, bezogen auf das Gewicht der Lösung.

18. Konzentrierte wässrige Farbstofflösungen gemäss Anspruch 17, enthaltend einen Lösungsvermittler der Gruppe I) in einer Menge von 1 bis 3 Gew. %. bezogen auf das Gewicht der Lösung, oder einen Lösungsvermittler der Gruppen II), III) oder IV) in einer Menge von 6 bis 15 Gew. %, bezogen auf das Gewicht der Lösung.

19. Konzentrierte wässrige Farbstofflösungen gemäss einem der Ansprüche 1 bis 16, enthaltend eine C₁-C₄-Alkylcarbonsäure in einer Menge von 3 bis 20 Gew. %, bezogen auf das Gewicht der Lösung.

20. Konzentrierte wässrige Farbstofflösungen gemäss Anspruch 19, enthaltend eine C₁-C₄-Alkylcarbonsäure in einer Menge von 6 bis 15 Gew. %, bezogen auf das Gewicht der Lösung.

21. Verfahren zur Herstellung von konzentrierten wässrigen Lösungen von Farbstoffen der Formel (1) gemäss Anspruch 1, **dadurch gekennzeichnet, dass** man die bei der Herstellung des Farbstoffes anfallende Farbstoffsuspension filtriert, gegebenenfalls entsalzt, anschliessend unter Rühren die C₁-C₄-Alkylcarbonsäure, den Lösungsvermittler und ggf. weitere Zusätze zugibt und zum Schluss mit Wasser auf die gewünschte Konzentration einstellt.

22. Verwendung der konzentrierten wässrigen Farbstofflösungen gemäss Anspruch 1 zum Färben von Papier.

## Claims

1. A concentrated aqueous dye solution comprising
A)
a) at least 5% by weight, based on the weight of the solution, of a red dye of the formula 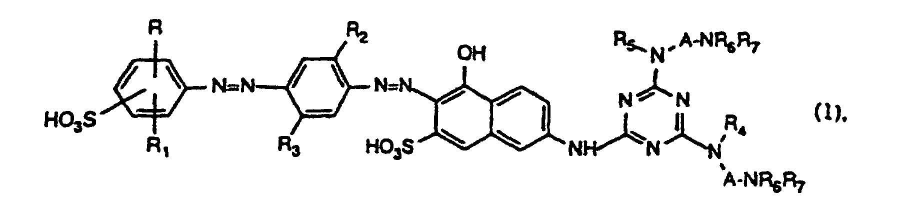 in which
R and R₁ independently of one another are each hydrogen, Cl, methyl or methoxy,
R₂ and R₃ independently of one another are each hydrogen, methyl or methoxy,
R₄ and R₅ independently of one another are each hydrogen or C₁-C₄alkyl,
A is an unbranched or branched alkylene radical, which can be interrupted by O, and
R₆ and R₇ independently of one another are each hydrogen or C₁-C₆ alkyl, or in which
R₆ and R₇, together with the N atom bonded to them, form a substituted or unsubstituted 5-, 6- or 7-membered ring, which can contain further heteroatoms,
b) formic acid or a C₁-C₄ alkylcarboxylic acid,
c) a solubilizing agent selected from the group comprising
I) alkali metal or ammonium salts of C₁-C₄alkylcarboxylic acids,
II) formamide or urea,
III) γ-butyrolactam, ε-caprolactam, γ-butyrolactone or ε-caprolactone,
IV) alkanolamines or reaction products of ethylene oxide and/or propylene oxide with alkanolamines,
d) water and, if appropriate,
e) further additives, or
B)
a) at least 5% by weight, based on the weight of the solution, of a red dye of the formula (I),
b) formic acid or a C₁-C₄alkylcarboxylic acid,
c) water and, if appropriate,
d) further additives, with the condition that the solutions comprise no solubilizing agent and less than 0.1% by weight of alkali metal halide, based on the total weight of the solution.

2. A concentrated aqueous dye solution according to claim 1, comprising
a) at least 5% by weight, based on the weight of the solution, of a red dye of the formula 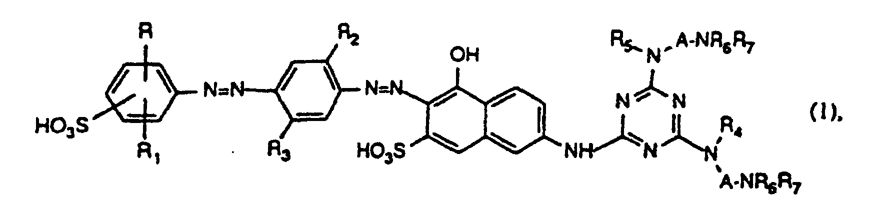 in which
R and R₁ independently of one another are each hydrogen, Cl, methyl or methoxy,
R₂ and R₃ independently of one another are each hydrogen, methyl or methoxy,
R₄ and R₅ independently of one another are each hydrogen or C₁-C₄alkyl,
A is an unbranched or branched alkylene radical, which can be interrupted by O, and
R₆ and R₇ independently of one another are each hydrogen or C₁-C₆alkyl, or in which
R₆ and R₇, together with the N atom bonded to them, form a substituted or unsubstituted 5-, 6- or 7-membered ring, which can contain further heteroatoms,
b) formic acid or a C₁-C₄alkylcarboxylic acid,
c) a solubilizing agent,
d) water and, if appropriate,
e) further additives.

3. A concentrated aqueous dye solution according to claim 1 or 2, in which R and R₁ are each H, methyl or methoxy.

4. A concentrated aqueous dye solution according to claim 3, in which R and R₁ are each H.

5. A concentrated aqueous dye solution according to any one of claims 1 to 4, in which R₂ and R₃ are each H.

6. A concentrated aqueous dye solution according to any one of claims 1 to 5, in which R₄ and R₅ are each methyl or hydrogen.

7. A concentrated aqueous dye solution according to any one of claims 1 to 6, in which A is a radical of the formula -(CH₂)ₙ-, in which n is an integer from 2 to 6.

8. A concentrated aqueous dye solution according to claim 7, in which A is ethylene, n-propylene, iso-propylene or n-butylene.

9. A concentrated aqueous dye solution according to any one of claims 1 to 8, in which R₆ and R₇ independently of one another are each unsubstituted C₁- to C₄alkyl.

10. A concentrated aqueous dye solution according to claim 9, in which R₆ and R₇ are identical and are each methyl or ethyl.

11. A concentrated aqueous dye solution according to any one of claims 1 to 10, in which the sulfo group is located in the m- or in the p-position relative to the azo group.

12. A concentrated aqueous dye solution according to any one of claims 1 to 11, comprising 6 to 20% by weight of dye, based on the weight of the solution.

13. A concentrated aqueous dye solution according to claim 12, comprising 8 to 10% by weight of dye, based on the weight of the solution.

14. A concentrated aqueous dye solution according to any one of claims 1 to 13, comprising a dye of the formula 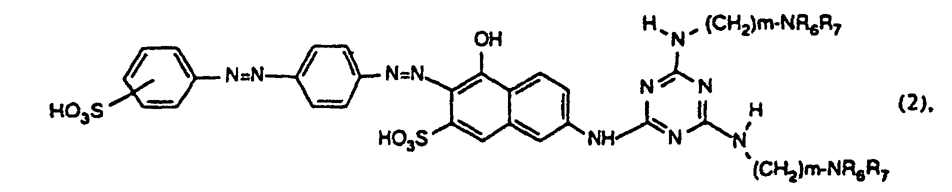 in which
m is 2, 3 or 4, and
R₆ and R₇ are each C₁-C₂alkyl.

15. A concentrated aqueous dye solution according to claim 1, comprising, as the solubilizing agent, sodium acetate or ammonium acetate, formamide, urea, ε-caprolactam or a compound of the formula 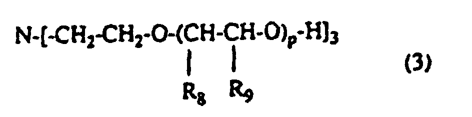 in which
p is an integer from 1 to 6 and of the substituents
R₈ and R₉, one is hydrogen and the other is hydrogen or methyl.

16. A concentrated aqueous dye solution according to claim 15, in which p is 1.

17. A concentrated aqueous dye solution according to any one of claims 1 to 16, comprising a solubilizing agent of group I) in an amount of 1 to 5% by weight, based on the weight of the solution, or a solubilizing agent of groups II), III) or IV) in an amount of 3 to 20% by weight, based on the weight of the solution.

18. A concentrated aqueous dye solution according to claim 17, comprising a solubilizing agent of group I) in an amount of 1 to 3% by weight, based on the weight of the solution, or a solubilizing agent of groups II), III) or IV) in an amount of 6 to 15% by weight, based on the weight of the solution.

19. A concentrated aqueous dye solution according to any one of claims 1 to 16, comprising a C₁-C₄alkylcarboxylic acid in an amount of 3 to 20% by weight, based on the weight of the solution.

20. A concentrated aqueous dye solution according to claim 19, comprising a C₁-C₄alkylcarboxylic acid in an amount of 6 to 15% by weight, based on the weight of the solution.

21. A process for the preparation of a concentrated aqueous solution of a dye of the formula (1) according to claim 1, which comprises filtering and, if appropriate, desalinating the dye suspension obtained during preparation of the dye, subsequently adding the C₁-C₄alkylcarboxylic acid, the solubilizing agent and, if appropriate, further additives, while stirring, and finally adjusting to the desired concentration with water.

22. The use of a concentrated aqueous dye solution according to claim 1 for dyeing paper.

## Revendications

1. Solutions aqueuses concentrées de colorants, contenant
A)
a) au moins 5 % en poids, par rapport au poids de la solution, d'un colorant rouge de formule 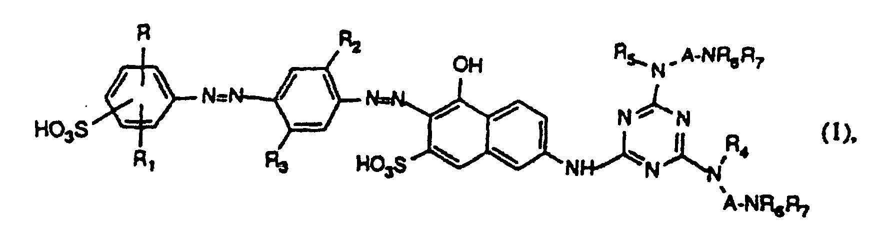 dans laquelle
R et R₁ représentent indépendamment l'un de l'autre respectivement un atome d'hydrogène, Cl, un groupe méthyle ou méthoxy,
R₂ et R₃ représentent indépendamment l'un de l'autre respectivement un atome d'hydrogène, un groupe méthyle ou méthoxy,
R₄ et R₅ représentent indépendamment l'un de l'autre respectivement un atome d'hydrogène ou un groupe alkyle en C₁ à C₄,
A représente un groupe alkylène ramifié ou non ramifié, qui peut être interrompu par O,
R₆ et R₇ représentent indépendamment l'un de l'autre respectivement un atome d'hydrogène ou un groupe alkyle en C₁ à C₆ ou dans laquelle
R₆ et R₇ forment ensemble avec l'atome d'azote auxquels ils sont liés un cycle à 5, 6 ou 7 chaînons éventuellement substitués, qui peut contenir d'autres hétéroatomes,
b) de l'acide formique ou un acide alkyle en C₁ à C₄-carboxylique,
c) un adjuvant de dissolution, choisi dans le groupe constitué de
I) sels de métal alcalin ou d'ammonium d'acides alkyle en C₁ à C₄ carboxyliques,
II) formamide ou urée,
III) γ-butyrolactame, ε-caprolactame, γ-butyrolactone ou ε-caprolactone,
IV) alcanolamines ou des produits de réaction d'oxyde d'éthylène et/ou d'oxyde de propylène avec des alcanolamines,
d) de l'eau et éventuellement
e) d'autres additifs ou
B)
a) au moins 5 % en poids, par rapport au poids de la solution, d'un colorant rouge de formule (1),
b) l'acide formique ou un acide alkyle en C₁ à C₄-carboxylique,
c) de l'eau et éventuellement
d) d'autres additifs, avec la condition que les solutions ne contiennent pas d'adjuvant de dissolution et moins de 0,1 % en poids d'halogénure de métal alcalin, par rapport au poids total de la solution.

2. Solutions aqueuses concentrées de colorants selon la revendication 1, contenant
a) au moins 5 % en poids, par rapport au poids de la solution, d'un colorant rouge de formule 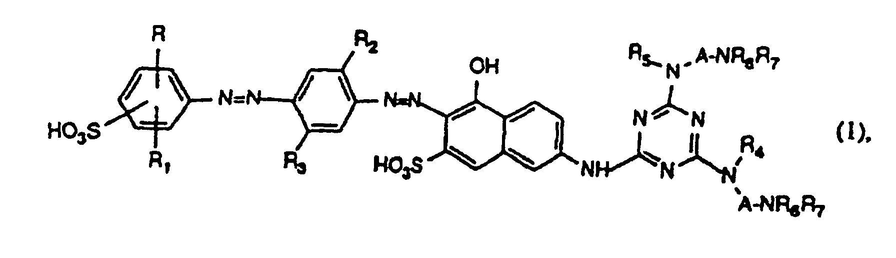 dans laquelle
R et R₁ représentent indépendamment l'un de l'autre respectivement un atome d'hydrogène, Cl, un groupe méthyle ou méthoxy,
R₂ et R₃ représentent indépendamment l'un de l'autre respectivement un atome d'hydrogène, un groupe méthyle ou méthoxy,
R₄ et R₅ représentent indépendamment l'un de l'autre respectivement un atome d'hydrogène ou un groupe alkyle en C₁ à C₄,
A représente un groupe alkylène non ramifié ou ramifié, qui peut être interrompu par O,
R₆ et R₇ représentent indépendamment l'un de l'autre respectivement un atome d'hydrogène ou un groupe alkyle en C₁ à C₆ ou dans laquelle
R₆ et R₇ forment ensemble avec l'atome N auxquels ils sont liés un cycle à 5, 6 ou 7 chaînons éventuellement substitués, qui peut contenir d'autres hétéroatomes,
b) l'acide formique ou un acide alkyle en C₁ à C₄-carboxylique,
c) un adjuvant de dissolution,
d) de l'eau et éventuellement
e) d'autres additifs.

3. Solutions aqueuses concentrées de colorants selon une des revendications 1 ou 2, dans laquelle R et R₁ représentent respectivement H, un méthyle ou méthoxy.

4. Solutions aqueuses concentrées de colorants selon la revendication 3, dans lesquelles R et R₁ représentent respectivement H.

5. Solutions aqueuses concentrées de colorants selon une des revendications 1 à 4, dans lesquelles R₂ et R₃ représentent respectivement H.

6. Solutions aqueuses concentrées de colorants selon une des revendications 1 à 5, dans lesquelles R₄ et R₅ représentent respectivement le méthyle ou l'hydrogène.

7. Solutions aqueuses concentrées de colorants selon une des revendications 1 à 6, dans lesquelles A représente un groupe de formule -(CH₂)ₙ-, dans laquelle n représente un nombre entier de 2 à 6.

8. Solutions aqueuses concentrées de colorants selon la revendication 7, dans lesquelles A représente l'éthylène, le n-propylène, l'isopropylène ou le n-butylène.

9. Solutions aqueuses concentrées de colorants selon une des revendications 1 à 8, dans lesquelles R₆ et R₇ représentent indépendamment l'un de l'autre un groupe alkyle en C₁ à C₄ respectivement non substitué.

10. Solutions aqueuses concentrées de colorants selon la revendication 9, dans lesquelles R₆ et R₇ sont identiques et représentent respectivement le méthyle ou l'éthyle.

11. Solutions aqueuses concentrées de colorants selon une des revendications 1 à 10, dans lesquelles le groupe sulfo est disposé en position m ou p par rapport au groupe azoïque.

12. Solutions aqueuses concentrées de colorants selon une des revendications 1 à 11, contenant 6 à 20 % en poids de colorants, par rapport au poids de la solution.

13. Solutions aqueuses concentrées de colorants selon la revendication 12, contenant 8 à 10 % en poids de colorants, par rapport au poids de la solution.

14. Solutions aqueuses concentrées de colorants selon une des revendications 1 à 13, contenant un colorant de formule 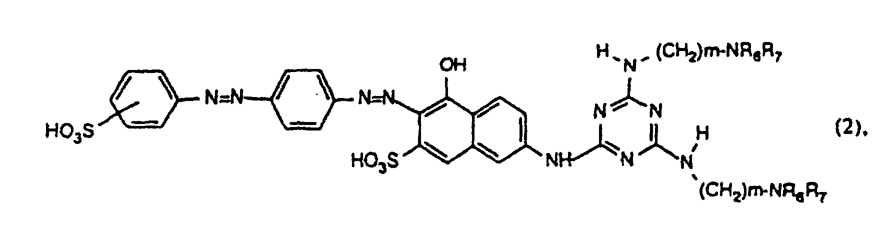 dans laquelle
m représente 2, 3 ou 4 et
R₆ et R₇ représentent respectivement un groupe alkyle en C₁ à C₂.

15. Solutions aqueuses concentrées de colorants selon la revendication 1, contenant comme adjuvants de dissolution l'acétate de sodium ou d'ammonium, le formamide, l'urée, l'ε-caprolactame ou un composé de formule 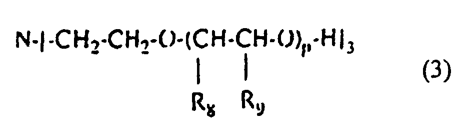 dans laquelle
p représente un nombre entier de 1 à 6 et parmi les substituants
R₈ et R₉ représentent l'un l'hydrogène et l'autre l'hydrogène ou le méthyle.

16. Solutions aqueuses concentrées de colorants selon la revendication 15, dans lesquelles p est égal à 1.

17. Solutions aqueuses concentrées de colorants selon une des revendications 1 à 16, contenant un adjuvant de dissolution de groupe I) en une quantité de 1 à 5 % en poids, par rapport au poids de la solution, ou un adjuvant de dissolution des groupes II), III) ou IV) en une quantité de 3 à 20 % en poids, par rapport au poids de la solution.

18. Solutions aqueuses concentrées de colorants selon la revendication 17, contenant un adjuvant du groupe I) en une quantité de 1 à 3 % en poids, par rapport au poids de la solution, ou un adjuvant de dissolution des groupes II), III) ou IV) en une quantité de 6 à 15 % en poids, par rapport au poids de la solution.

19. Solutions aqueuses concentrées de colorants selon une des revendications 1 à 16, contenant un acide alkyle en C₁ à C₄-carboxylique en une quantité de 3 à 20 % en poids, par rapport au poids de la solution.

20. Solutions aqueuses concentrées de colorants selon la revendication 19, contenant un acide alkyle en C₁ à C₄-carboxylique en une quantité de 6 à 15 % en poids, par rapport au poids de la solution.

21. Procédé de fabrication de solutions aqueuses concentrées de colorants de formule (1) selon la revendication 1, **caractérisé en ce qu'**on filtre dans la fabrication du colorant une suspension de colorants précipitée, on désionise éventuellement, on ajoute ensuite sous agitation l'acide alkyle en C₁ à C₄-carboxylique, l'adjuvant de dissolution et éventuellement d'autres additifs et enfin on ajuste avec de l'eau à la concentration souhaitée.

22. Utilisation des solutions aqueuses concentrées de colorants selon la revendication 1 pour la teinture de papier.
